# EUROPEAN PATENT APPLICATION

(11) **EP 3 299 233 A1**
(43) Date of publication of application: **28.03.2018**
(21) Application number: 17780975.3
(22) Date of filing: 16.06.2017
(51) Int. Cl.: B60T 17/18, B60T 8/171, B60T 7/04

(54) **BRAKE DEVICE AND BRAKING METHOD**

(30) Priority: 25.07.2016 KR 20160094301
(71) Applicant: Seung Woo, Han, Incheon 406-840 (KR)
(72) Inventor: Seung Woo, Han, Incheon 406-840 (KR)
(74) Representative: Vossius & Partner Patentanwälte Rechtsanwälte mbB
(86) International application number: PCT/KR2017/006363
(87) International publication number: WO 2018/021689

(57) **Abstract**

Disclosed herein are a brake system and a method therefor. The brake system is used in a negative brake system and includes a service brake line through which a pressure is supplied to or recovered from a service brake for application or release of a braking force thereto or therefrom, a parking brake line through which a pressure is supplied to or recovered from a parking brake for application or release of a braking force thereto or therefrom, and a control unit configured to detect whether or not a driver operates the service brake to control the recovery of the pressure in the parking brake line when an abnormality occurs in the service brake line.

## Description

### TECHNICAL FIELD

The present invention relates to a vehicle braking technique, and more particularly, to a brake system and a method therefor.

### BACKGROUND ART

A brake system is a mechanical system that converts kinetic energy of a vehicle, such as a car or heavy equipment, into thermal energy by a driver's operating force or a force, e.g. a frictional force, generated by auxiliary power, to perform braking. The brake system used for the vehicle or the like includes a service brake that is operated by driver's operation during driving of the vehicle and a parking brake that is operated by driver's operation for stopping or parting of the vehicle.

This brake system is classified into a friction brake system and a non-friction brake system according to whether or not to use a frictional force. The friction brake system includes a vacuum brake, a hydraulic brake, an air brake, etc., and the non-friction brake system includes an electronic brake, a fluid brake, etc. The hydraulic brake of the friction brake system is well used for most cars, in which case the force that a driver presses a pedal is transmitted through oil pressure for conversion into braking force of wheels. In addition, the air brake is well used for heavy vehicles such as buses or trucks.

Meanwhile, the brake system may be classified into a positive brake system and a negative brake system. The positive brake system means a brake system that is operated such that brake discs come into contact with each other by pressure supplied to stop or decelerate a vehicle in a state in which the brake discs are not basically in contact with each other. On the other hand, the negative brake system means a brake system that is operated such that brake discs are separated from each other by pressure supplied to move a vehicle in a state in which the brake discs are basically in contact with each other.

In the negative brake system, a brake is operated by release of pressure through driver's control in a normal state. However, the pressure supplied to a parking brake is automatically released so that a braking force is applied to the parking brake, in an emergency situation, such as a situation where a vehicle stalls during traveling, a situation where an engine is abnormally stopped, a situation where an abnormality occurs in electric systems, or a situation where an abnormality occurs in hydraulic or pneumatic systems.

To move the vehicle for repair in such an emergency situation, it is necessary to release the braking force of the parking brake or lift and move the vehicle itself.

Here, the braking force of the parking brake should be released when it is impossible or difficult to move the vehicle itself. To this end, the related art has used a method of releasing a braking force by disassembling a brake system itself or by forming a hole in the brake system for communication with a brake chamber to supply a pressure to a brake using a separate pressure supply means.

However, the above method is performed using a separate device by a technical expert for a long time since the brake system itself needs to be disassembled from the vehicle or the hole needs to be artificially formed in the brake system for supply of pressure thereto.

Meanwhile, when the pressure supplied to a parking brake is automatically released due to occurrence of abnormality such as service brake failure during driving of a vehicle, a braking force is applied to the parking brake, thereby causing the vehicle to suddenly stop. Hence, when sudden braking is performed by the parking brake, a dangerous situation may occur in which an occupant slides to one side and strikes the internal structure of the vehicle or the vehicle loses its balance and turns.

### [Related Art Document]

### [Patent Document]

Korean Patent Application Publication No. 2010-0121393

### DISCLOSURE

### TECHNICAL PROBLEM

Accordingly, the present invention has been made in view of the above-mentioned issues, and an object thereof is to provide a system and method capable of preventing a dangerous situation due to sudden braking of a parking brake.

### TECHNICAL SOLUTION

In accordance with an aspect of the present invention, a brake system is used in a negative brake system and includes a service brake line through which a pressure is supplied to or recovered from a service brake for application or release of a braking force thereto or therefrom, a parking brake line through which a pressure is supplied to or recovered from a parking brake for application or release of a braking force thereto or therefrom, and a control unit configured to detect whether or not a driver operates the service brake to control the recovery of the pressure in the parking brake line when an abnormality occurs in the service brake line.

The detection of whether or not the service brake is operated may be performed by a sensor for detecting whether or not a service brake pedal moves down.

Alternatively, the detection of whether or not the service brake is operated may be performed by a sensor for detecting whether or not to move a piston of a service brake pressure supply device.

The control unit may operate a valve on the parking brake line to control the recovery of the pressure in the parking brake line.

The valve may be a proportional valve.

The control unit may recover the pressure in the parking brake line by a predetermined pressure per hour.

The control unit may be a transmission electronic control unit.

The service brake line may include a first service brake line through which a pressure is supplied to or recovered from the service brake for application or release of the braking force thereto or therefrom, and a second service brake line connected to a first chamber of one of brake discs to supply a pressure to the first chamber. The parking brake line may include a first parking brake line through which a pressure is supplied to or recovered from the parking brake for application or release of the braking force thereto or therefrom, and a second parking brake line connected to a second chamber of the other of the brake discs to supply a pressure to the second chamber.

The brake system may further include a parking release valve switchable between a first state, in which the first service brake line communicates with the second service brake line and the first parking brake line communicates with the second parking brake line, and a second state in which the first service brake line communicates with the second parking brake line.

The first parking brake line may be disconnected from the second service brake line in the second state.

In the second state to which the parking release valve switches, the parking brake may be released by the pressure supplied through the first service brake line and the second parking brake line.

In accordance with another aspect of the present invention, a braking method includes detecting an abnormality of a service brake line of a vehicle in a negative brake system, and stopping the vehicle with a parking brake when the abnormality of the service brake line is detected, wherein the stopping the vehicle is performed by detecting whether or not a driver operates a service brake to control recovery of a pressure in a parking brake line.

The detection of whether or not the service brake is operated may be performed by a sensor for detecting whether or not a service brake pedal moves down.

Alternatively, the detection of whether or not the service brake is operated may be performed by a sensor for detecting whether or not to move a piston of a service brake pressure supply device.

A valve on the parking brake line may be operated to control the recovery of the pressure in the parking brake line.

The valve may be a proportional valve.

The pressure in the parking brake line may be controlled to be recovered by a predetermined pressure per hour.

The controlling recovery of a pressure may be performed by a transmission electronic control unit.

The service brake line may include a first service brake line through which a pressure is supplied to or recovered from the service brake for application or release of a braking force thereto or therefrom, and a second service brake line connected to a first chamber of one of brake discs to supply a pressure to the first chamber. The parking brake line may include a first parking brake line through which a pressure is supplied to or recovered from the parking brake for application or release of a braking force thereto or therefrom, and a second parking brake line connected to a second chamber of the other of the brake discs to supply a pressure to the second chamber.

A first state, in which the first service brake line communicates with the second service brake line and the first parking brake line communicates with the second parking brake line, and a second state, in which the first service brake line communicates with the second parking brake line, may be switchable therebetween.

The first parking brake line may be disconnected from the second service brake line in the second state.

In the second state, the parking brake may be released by the pressure supplied through the first service brake line and the second parking brake line.

### ADVANTAGEOUS EFFECTS

In accordance with exemplary embodiments of the present invention, it is possible to slowly stop a vehicle while preventing sudden braking by a parking brake in the event of a vehicle emergency, particular when an abnormality occurs in service brake lines. Thus, the present invention has an effect of protecting an occupant and a vehicle from a dangerous situation due to the sudden braking of the vehicle in the event of a vehicle emergency.

In addition, since a braking force is applied to the parking brake by the operation of a service brake pedal, it is possible to apply the braking force by the same operation as in a normal state even in the event of an emergency.

### BRIEF DESCRIPTION OF DRAWINGS

Fig. 1 is a diagram illustrating a state in which a brake system according to an embodiment of the present invention is normally operated.
Fig. 2 is a diagram illustrating a first emergency situation, such as a situation where a vehicle stalls, a situation where an engine is abnormally stopped, a situation where an abnormality occurs in an electric system, or a situation where an abnormality occurs in a hydraulic or pneumatic system of a parking brake, in the brake system according to the embodiment of the present invention.
Fig. 3 is a diagram illustrating a second emergency, such as a situation where an abnormality occurs in a hydraulic or pneumatic system of a service brake in the brake system according to the embodiment of the present invention.
Fig. 4 is a diagram illustrating a state in which service brake lines are abnormal in a brake assembly according to the embodiment of the present invention.
Fig. 5 is a diagram illustrating a normal state in the brake assembly according to the embodiment of the present invention.
Fig. 6 is a diagram illustrating a brake system according to another embodiment of the present invention.

### BEST MODE FOR INVENTION

Reference will now be made in detail to embodiments of the present invention, examples of which are illustrated in the accompanying drawings.

In certain embodiments, detailed descriptions of technology well known in the art may be omitted to avoid obscuring appreciation of the disclosure by a person of ordinary skill in the art. In addition, the terms used in the specification are terms defined in consideration of functions of the present invention, and these terms may vary with the intention or practice of a user or an operator. Therefore, these terms should be defined based on the entire content disclosed herein.

It will be understood that the present disclosure is defined only by the claims. These embodiments are provided so that this disclosure will be thorough and complete, and will fully convey the scope of the disclosure to those skilled in the art.

Hereinafter, the configuration and operation of a brake system, in each case of normal operation, parking brake line breakage or engine stop, and service brake line breakage, according to an embodiment of the present invention will be described in detail with reference to the accompanying drawings.

In the following description, the pressure supplied for application and release of a braking force may be a fluid pressure, in which case the fluid pressure may be an oil or air pressure. Hereinafter, the term "supply of pressure" means the supply of the oil or air pressure.

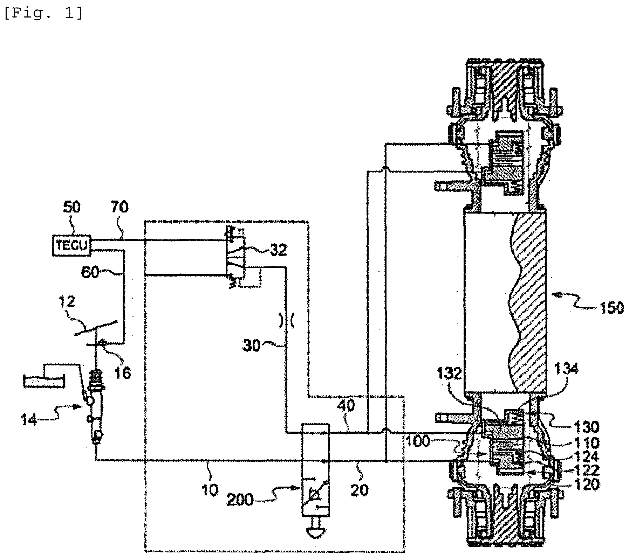

First, as illustrated in Fig. 1, the brake system according to the embodiment of the present invention is a system that is used in a negative brake system, and may include a first service brake line 10 through which a pressure may be supplied to or recovered from a service brake for application or release of a braking force thereto or therefrom, and a first parking brake line 30 through which a pressure may be supplied to or recovered from a parking brake for application or release of a braking force thereto or therefrom. In addition, the brake system may include a second service brake line 20 that is connected to a first chamber 120 of one of brake discs 110 located within a brake assembly 100 to supply a pressure to the first chamber 120, and a second parking brake line 40 that is connected to a second chamber 130 of the other of the brake discs 110 to supply a pressure to the second chamber 130. Here, the respective first and second chambers 120 and 130 may include therein chamber blocks 122 and 132 and elastic means 124 and 134 for elastically supporting the respective chamber blocks 122 and 132. When the pressure is supplied to the first chamber 120, the braking force is applied to the brake by the chamber block 122 against the support force of the elastic means 124. When the pressure is recovered from the first chamber 120, the brake may be released by the restoring force of the elastic means 124. When the pressure is supplied to the second chamber 130 in a state in which the chamber block 132 is elastically supported to apply the braking force to the brake, the brake may be released by the chamber block 132 against the support force of the elastic means 134.

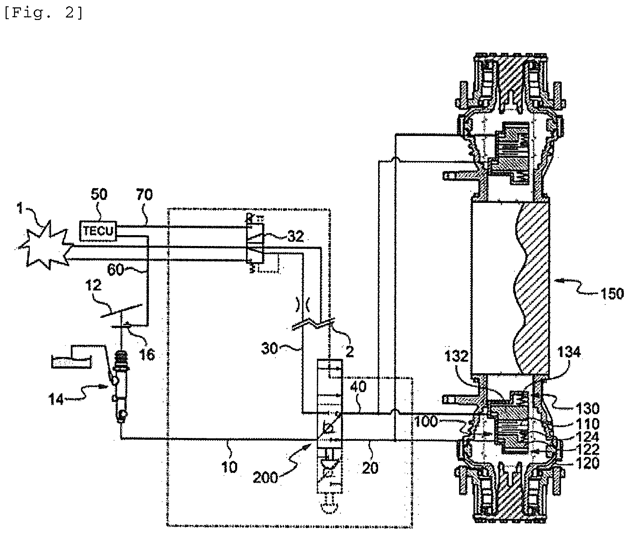

Furthermore, the brake system according to the embodiment of the present invention may include a parking release valve 200. The parking release valve 200 may switch between a first state (see Fig. 1), in which the first service brake line 10 communicates with the second service brake line 20 and the first parking brake line 30 communicates with the second parking brake line 40, and a second state (see Fig. 2) in which the first service brake line 10 communicates with the second parking brake line 40. Meanwhile, a separate check valve (not shown) may be provided on the first parking brake line 30 to control the supply of pressure to the first parking brake line 30.

Next, the brake system, in each case when the vehicle is stalled or parked and stopped and when the vehicle travels, according to the embodiment of the present invention will be described in more detail with reference to Figs. 1 and 2.

First, as illustrated in Figs. 1 and 2, the brake system according to the embodiment of the present invention may include the first service brake line 10 through which the pressure may be supplied to or recovered from the service brake for application or release of the braking force thereto or therefrom, the first parking brake line 30 through which the pressure may be supplied to or recovered from the parking brake for application or release of the braking force thereto or therefrom, the second service brake line 20 that is connected to the first chamber 120 of one of the brake discs 110 to supply the pressure to the first chamber 120, and the second parking brake line 40 that is connected to the second chamber 130 of the other of the brake discs 110 to supply the pressure to the second chamber 130.

The brake system according to the embodiment of the present invention enables the vehicle to be manually or automatically parked through the above configuration.

Fig. 1 is a diagram illustrating a state in which the brake system is normally operated.

As illustrated in Fig. 1, when the vehicle is stalled or parked and stopped, a valve 32 provided on the first parking brake line 30 is in an off state. In this case, since the fluid in the second chamber 130 of the brake assembly 100 is discharged through the second and first parking brake lines 40 and 30 due to the characteristics of the negative brake system, the brake discs 110 come into contact with each other with the consequence that the braking force is applied to the parking brake.

In addition, the first service brake line 10 is connected to a brake pedal 12, and a service brake pressure supply device 14 is provided on a path therebetween.

As such, since the braking force is applied to the parking brake when the vehicle is stalled or parked and stopped, the vehicle is not moved.

Next, when the vehicle travels, the valve 32 provided on the first parking brake line 30 may be turned on. In this case, a pressure is supplied into the second chamber 130 of the brake assembly 100 through the second parking brake line 40 from the first parking brake line 30. By supply of the pressure, the brake discs 110 are separated from each other with the consequence that the braking force of the parking brake is released.

In addition, the first service brake line 10 is connected to the brake pedal 12, and the service brake pressure supply device 14 is provided on the path therebetween. When a pressure is supplied into the first chamber 120 of the brake assembly 100 from the service brake pressure supply device 14 by pressing the brake pedal 12 by a driver, the brake discs 110 come into contact with each other with the consequence that the braking force is applied to the service brake. On the other hand, when the pressing of the brake pedal 12 by the driver is released, the fluid in the first chamber 120 of the brake assembly 100 is discharged through the second and first service brake lines 20 and 10. Thus, the brake discs 110 are separated from each other with the consequence that the braking force of the service brake is released. That is, the brake discs 110 may come into contact with or be separated from each other according to whether or not the driver presses the brake pedal 12.

As such, the braking force of the parking brake is released when the vehicle travels. Accordingly, the braking force is applied to or released from the service brake according to whether or not to press the brake pedal 12.

As described above, the vehicle is in the normal state when it is stalled or parked and stopped and when it travels. In this case, the parking release valve 200 according to the embodiment of the present invention is in the first state, namely in the state in which the first service brake line 10 communicates with the second service brake line 20 and the first parking brake line 30 communicates with the second parking brake line 40.

Next, Fig. 2 is a diagram illustrating a first emergency situation, such as a situation where a vehicle stalls, a situation where an engine is abnormally stopped, a situation where an abnormality occurs in an electric system, or a situation where an abnormality occurs in a hydraulic or pneumatic system of the parking brake.

As illustrated in Fig. 2, when the vehicle is in the first emergency situation, the supply of pressure to the first parking brake line 30 is stopped in the vehicle. Accordingly, the fluid in the second chamber 130 of the brake assembly 100 is discharged through the second and first parking brake lines 40 and 30. Thus, the brake discs 110 come into contact with each other with the consequence that the braking force is applied to the parking brake. Meanwhile, the valve 32 provided on the first parking brake line 30 is illustrated to be in an off state for easy description of the above state.

Similarly, the first service brake line 10 is connected to the brake pedal 12, and the service brake pressure supply device 14 is provided on the path therebetween.

As such, since the braking force is applied to the parking brake in the emergency situation, the vehicle is not moved.

In this state, when the parking release valve 200, which is in the first state, switches to the second state in which the first service brake line 10 communicates with the second parking brake line 40, namely when the parking release valve 200 moves to a second position (indicated by the solid line in Fig. 2) such that a spool is in the second state, the braking force applied to the parking brake may be released.

Consequently, a pressure is supplied to the second chamber 130 of the other of the brake discs 110 connected to the second parking brake line 40, thereby enabling the braking force of the parking brake to be released.

In this emergency situation, the first parking brake line 30 may be disconnected from the second service brake line 20. However, in the brake system according to the embodiment of the present invention, a pressure is supplied through the first service brake line 10 and the second parking brake line 40 in order to release the braking force of the parking brake in the emergency situation, and no pressure is supplied through the first parking brake line 30. Therefore, the first parking brake line 30 may also communicate with the second service brake line 20.

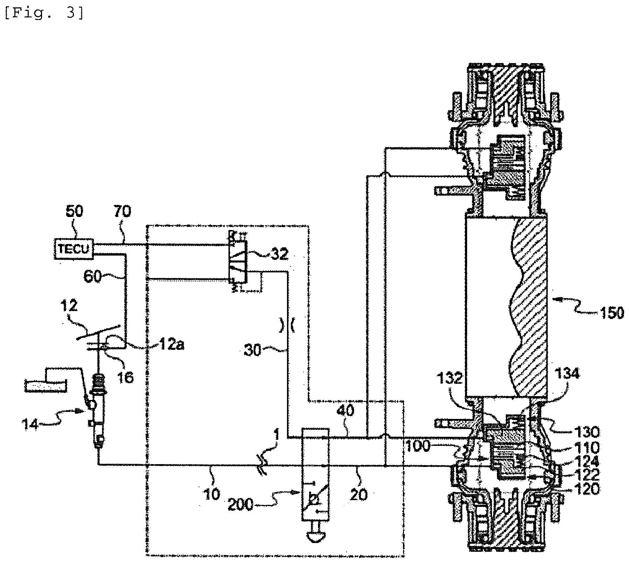

Fig. 3 is a diagram illustrating a second emergency situation, such as a situation where an abnormality occurs in a hydraulic or pneumatic system of the service brake.

Referring to Fig. 3, when an abnormality occurs in the service brake lines 10 and 20, the recovery of pressure in the parking brake lines 30 and 40 is controlled by detecting whether or not the driver operates the service brake. Thus, the parking brake may substitute for the role of the service brake. The detection of whether or not the driver operates the service brake may be performed by a sensor 16 that detects whether or not the service brake pedal 12 moves down. The sensor 16 may be a switch that is positioned beneath the service brake pedal 12. When the driver presses the service brake pedal 12, the service brake pedal 12a may move down to come into contact with the sensor 16. Through such a structure, the sensor 16 may detect the downward movement of the service brake pedal 12.

When the sensor 16 detects the downward movement of the service brake pedal 12, a detection signal may be transmitted to a control unit 50 through a first control line 60 connected to the sensor 16. The control unit 50 may be a transmission electronic control unit (TECU). When the detection signal is transmitted to the control unit 50, the control unit 50 may operate the valve 32 disposed on the first parking brake line 30 through a second control line 70 to control the recovery of pressure in the parking brake lines 30 and 40. In order to slowly recover the pressure in the parking brake lines 30 and 40, the valve 32 may be a proportional valve. Since the proportional valve is used as the valve 32, the valve 32 enables the pressure in the parking brake lines to be slowly recovered by a predetermined pressure per hour.

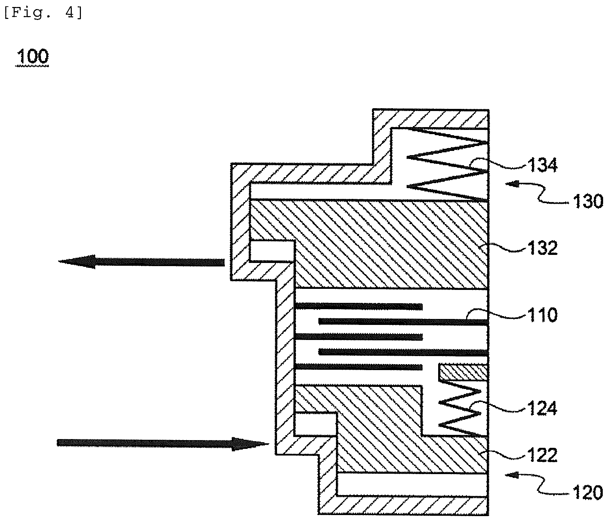

Fig. 4 is a diagram illustrating a state of the brake assembly 100 when the service brake lines are abnormal.

Referring to Fig. 4, when an abnormality occurs in the service brake lines, the first chamber 120 in the brake assembly 100 is not operated. However, in the brake system according to the embodiment of the present invention, when the driver presses the service brake pedal, the pressure in the parking brake lines 30 and 40 may be recovered by the control unit 50 so that the second chamber 130 is operated. That is, it is possible to reduce the pressure for the second chamber block 132 against the support force of the second elastic means 134 by recovering the pressure in the parking brake lines 30 and 40. Then, the second chamber block 132 may come into contact with the brake discs 110 by the support force of the second elastic means 134, to thereby apply braking to the vehicle. However, since the pressure in the parking brake lines 30 and 40 is slowly recovered by the valve 32 as described above, the braking of the vehicle may be performed smoothly rather than suddenly.

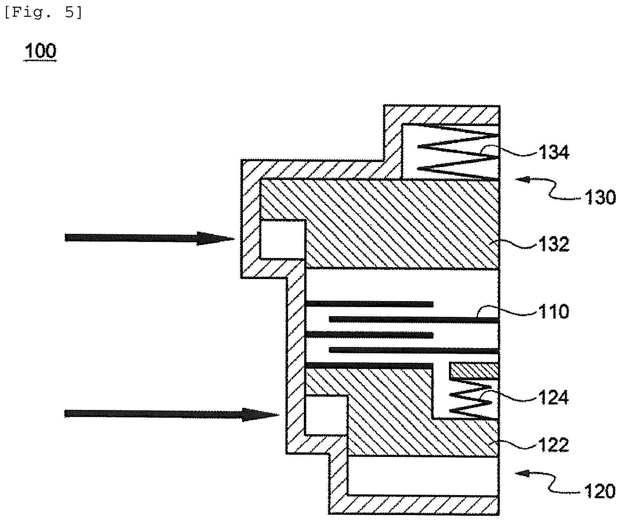

Fig. 5 is a diagram illustrating the brake assembly 100 in a normal state.

Referring to Fig. 5, when the driver presses the service brake pedal in the normal state, the pressure in the service brake lines 10 and 20 may be recovered so that the first chamber is operated. That is, it is possible to reduce the pressure for the first chamber block 122 against the support force of the first elastic means 124 by recovering the pressure in the service brake lines 10 and 20. Then, the first chamber block 122 may come into contact with the brake discs 110 by the support force of the first elastic means 124, to thereby apply braking to the vehicle.

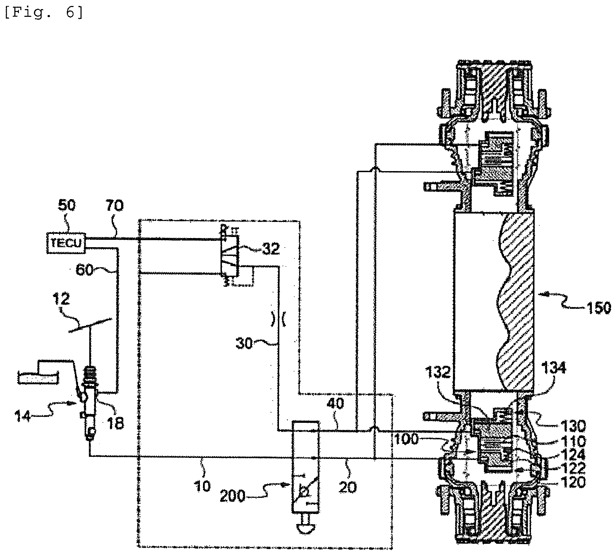

Fig. 6 is a diagram illustrating a brake system according to another embodiment of the present invention. The description of the same configuration as the above-mentioned embodiment will be omitted.

Referring to Fig. 6, a sensor 18 for detecting whether or not the service brake is operated may be positioned at the service brake pressure supply device 14. In more detail, the sensor 18 may be installed to detect movement of a piston in the service brake pressure supply device 14. When the driver presses the service brake pedal 12, the piston in the service brake pressure supply device 14 may move. Accordingly, the detection of the movement of the piston in the service brake pressure supply device 14 by the sensor 18 may correspond to detecting the operation of the service brake by the driver. When the sensor 18 detects the movement of the piston in the service brake pressure supply device 14, the detected result may be transmitted to the control unit 50 through the first control line 60. The subsequent operations may be identical to those in the above-mentioned embodiment.

Although the present invention has been described with respect to the illustrative embodiments, it will be apparent to those skilled in the art that various variations and modifications may be made without departing from the spirit and scope of the invention as defined in the following claims.

### [Description of Reference Numerals]

10: first service brake line
12: service brake pedal
14: service brake pressure supply device
16, 18: sensor
20: second service brake line
30: first parking brake line
32: valve
40: second parking brake line
50: control unit
60: first control line
70: second control line
100: brake assembly
110: brake disc
120: first chamber
122: first chamber block
124: first elastic means
130: second chamber
132: second chamber block
134: second elastic means
200: parking release valve

## Claims

1. A brake system used in a negative brake system, comprising:
a service brake line through which a pressure is supplied to or recovered from a service brake for application or release of a braking force thereto or therefrom;
a parking brake line through which a pressure is supplied to or recovered from a parking brake for application or release of a braking force thereto or therefrom; and
a control unit configured to detect whether or not a driver operates the service brake to control the recovery of the pressure in the parking brake line when an abnormality occurs in the service brake line.

2. The brake system according to claim 1, wherein the detection of whether or not the service brake is operated is performed by a sensor for detecting whether or not a service brake pedal moves down.

3. The brake system according to claim 1, wherein the detection of whether or not the service brake is operated is performed by a sensor for detecting whether or not to move a piston of a service brake pressure supply device.

4. The brake system according to claim 1, wherein the control unit operates a valve on the parking brake line to control the recovery of the pressure in the parking brake line.

5. The brake system according to claim 4, wherein the valve is a proportional valve.

6. The brake system according to claim 4, wherein the control unit recovers the pressure in the parking brake line by a predetermined pressure per hour.

7. The brake system according to claim 1, wherein the control unit is a transmission electronic control unit.

8. The brake system according to claim 1, wherein the service brake line comprises:
a first service brake line through which a pressure is supplied to or recovered from the service brake for application or release of the braking force thereto or therefrom; and
a second service brake line connected to a first chamber of one of brake discs to supply a pressure to the first chamber, and
the parking brake line comprises:
a first parking brake line through which a pressure is supplied to or recovered from the parking brake for application or release of the braking force thereto or therefrom; and
a second parking brake line connected to a second chamber of the other of the brake discs to supply a pressure to the second chamber.

9. The brake system according to claim 8, further comprising a parking release valve switchable between a first state, in which the first service brake line communicates with the second service brake line and the first parking brake line communicates with the second parking brake line, and a second state in which the first service brake line communicates with the second parking brake line.

10. The brake system according to claim 9, wherein the first parking brake line is disconnected from the second service brake line in the second state.

11. The brake system according to claim 9, wherein, in the second state to which the parking release valve switches, the parking brake is released by the pressure supplied through the first service brake line and the second parking brake line.

12. A braking method comprising:
detecting an abnormality of a service brake line of a vehicle in a negative brake system; and
stopping the vehicle with a parking brake when the abnormality of the service brake line is detected,
wherein the stopping the vehicle is performed by detecting whether or not a driver operates a service brake to control recovery of a pressure in a parking brake line.

13. The braking method according to claim 12, wherein the detection of whether or not the service brake is operated is performed by a sensor for detecting whether or not a service brake pedal moves down.

14. The braking method according to claim 12, wherein the detection of whether or not the service brake is operated is performed by a sensor for detecting whether or not to move a piston of a service brake pressure supply device.

15. The braking method according to claim 12, wherein a valve on the parking brake line is operated to control the recovery of the pressure in the parking brake line.

16. The braking method according to claim 15, wherein the valve is a proportional valve.

17. The braking method according to claim 15, wherein the pressure in the parking brake line is controlled to be recovered by a predetermined pressure per hour.

18. The braking method according to claim 12, wherein the controlling recovery of a pressure is performed by a transmission electronic control unit.

19. The braking method according to claim 12, wherein the service brake line comprises:
a first service brake line through which a pressure is supplied to or recovered from the service brake for application or release of a braking force thereto or therefrom; and
a second service brake line connected to a first chamber of one of brake discs to supply a pressure to the first chamber, and
the parking brake line comprises:
a first parking brake line through which a pressure is supplied to or recovered from the parking brake for application or release of a braking force thereto or therefrom; and
a second parking brake line connected to a second chamber of the other of the brake discs to supply a pressure to the second chamber.

20. The braking method according to claim 19, wherein a first state, in which the first service brake line communicates with the second service brake line and the first parking brake line communicates with the second parking brake line, and a second state, in which the first service brake line communicates with the second parking brake line, are switchable therebetween.

21. The braking method according to claim 20, wherein the first parking brake line is disconnected from the second service brake line in the second state.

22. The braking method according to claim 20, wherein, in the second state, the parking brake is released by the pressure supplied through the first service brake line and the second parking brake line.
